(19) Europäisches Patentamt
European Patent Office
Office européen des brevets

(11) **EP 3 660 653 B1**

(12) **EUROPEAN PATENT SPECIFICATION**

(45) Date of publication and mention
of the grant of the patent:
**05.07.2023 Bulletin 2023/27**

(21) Application number: **18208769.2**

(22) Date of filing: **28.11.2018**

(51) International Patent Classification (IPC):
***G06F 3/12*** *(2006.01)*   ***G06K 15/00*** *(2006.01)*
***G03G 15/00*** *(2006.01)*

(52) Cooperative Patent Classification (CPC):
**G06F 3/1288; G03G 15/505; G06F 3/1217;**
**G06F 3/126; G06K 15/4025;** G06F 3/1213

(54) **METHOD FOR OPERATING A PRINTING SYSTEM, PRINTER CONTROLLER AND PRINTING SYSTEM**

VERFAHREN ZUM BETRIEB EINES DRUCKSYSTEMS, DRUCKERSTEUERGERÄT UND DRUCKSYSTEM

PROCÉDÉ DE FONCTIONNEMENT D'UN SYSTÈME D'IMPRESSION, DISPOSITIF DE COMMANDE D'IMPRIMANTE ET SYSTÈME D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.06.2020 Bulletin 2020/23**

(73) Proprietor: **Canon Production Printing Holding B.V.**
**5914 HH Venlo (NL)**

(72) Inventors:
• **ROELFS, Harmannus B.**
**5914 CA Venlo (NL)**

• **GEELS, Jan H.**
**5914 CA Venlo (NL)**
• **BLASIAK, Daniel B.**
**5914 CA Venlo (NL)**
• **BRÜNNER, Marvin P.**
**5914 CA Venlo (NL)**

(74) Representative: **Canon Production Printing IP Department**
**Canon Production Printing Netherlands B.V.**
**Van der Grintenstraat 10**
**5914 HH Venlo (NL)**

(56) References cited:
**EP-A2- 0 478 341**

## Description

## FIELD OF THE INVENTION

The present invention generally pertains to a method for operating a printing system including a printer and a finisher. The invention further pertains to a printer controller configured for performing said method as well as to a printing system comprising said printer controller, to a software medium comprising executable program code configured to, when executed, perform said method, and to a non-transitory computer-readable data storage medium comprising executable program code configured to, when executed, perform said method.

## BACKGROUND ART

Industrial printing systems (or: "production lines") often comprise a printer, i.e. a machine configured for marking a recording medium (or medium for short) as well as a finisher. The finisher is configured to process marked (or: printed) sheets of the medium to produce a variety of end products like loose leafs documents, booklets, brochures, folders, bound books etc. In this sense, finishing is herein to be understood as performing actions on printed sheets of a recording medium after they have been printed. Furthermore, a finisher may be understood to comprise a plurality of finishing devices, for example, a cutting device, a perforating device, a punching device, a binding device and/or the like. Finishing actions performed by the finisher may comprise a folding, cutting, trimming, stapling, punching, creasing and so on. An example of an enumeration of finishing actions is given in "JDF Specification", Release 1.5/Dec. 31, 2013 and/or in "JDF Specification" Release 1.6/Feb 28, 2018.

Finishers may be implemented as in-line, on-line, near-line or off-line finishers. With an in-line finisher, both the paper flow as well as the settings flow as integrated into the printing production route. In other words, no manual operation by a human operator or supervisor is necessary for producing a printed product, that is, for printing a recording medium and performing required finishing actions on it.

With an on-line finisher, the paper flow is integrated into the production route but the settings flow is not integrated. With a near-line finisher, the paper flow is not integrated, but the settings flow is integrated into the printing production route. With an off-line finisher, neither the paper flow nor the settings flow is integrated to the printing production route.

The present invention mainly pertains to in-line finishers although principles, applications and variants of the present invention are also applicable to on-line printers, near-line printers and off-line printers.

Modern printing systems are capable of printing and finishing a large number of documents very quickly. However, there are some requirements and preconditions throughout the printing and finishing process that lead to unproductive idle time and delays.

In US 2017/0206041 A1 (hereafter also cited as "van Horssen et al.") methods and principles are described for estimating and utilizing durations of various steps during the printing and/or finishing actions. Information gained and prepared in this way can be stored in a production route model, which can be executed in a simulation step and which may then provide information about timings of a particular production (that is printing and finishing) process.

In EP 0478341 A2 productivity in electronic printer incorporating finishing activities, and operation in a job streaming mode, are enhanced by utilizing software to calculate and predict the minimum delay (corresponding to minimum skip pitches) in successive jobs requiring finishing activities such as binding and stapling.

## SUMMARY OF THE INVENTION

It is one of the objects of the present invention to provide printing systems as well as methods for operating printing systems that are more efficient that present systems in utilizing the available time to produce as many finished products as quickly as possible.

The above objects are solved by the independent claims of the present invention.

According to a first aspect, the invention provides: a method for operating a printing system according to claim 1.

Herein, a set is considered to be a copy of the same document (e.g. an image, or a booklet), and a print job (or: "job" for short) should be understood to comprise one or more sets.

For example, a set could consist of a small booklet for which four sheets of the medium have to be marked, or printed, by the printer and which then have to be cut, folded and bound by the finisher. A print job may comprise two hundred of these sets, such that in total eight hundred sheets of the medium will be printed and two hundred of the booklets will have been produced when the print job is finished. This may be a first print job.

It should be understood that herein the designations "first print job" and "second print job" used herein specify a temporal relationship between these two print jobs, i.e. the first print job precedes the second print job. However, the first print job need not necessarily be the "first" in the sense that it is the first print job after activating a printer or the like.

After the first print job a second print job may be arrayed in a printing queue of a printer controller of the printing system, wherein according to the second print job sheets of a different type of medium have to be marked and have to be processed in a different way by the finisher from the way the sets of the first print job are processed by the finisher.

The finisher may be understood to comprise a plurality of finishing devices, for example, a cutting device, a perforating or punching device, a binding device and/or the like.

Actions (or: "finishing actions") performed by the finisher (or, more precisely, by at least one finishing device of the finisher) may comprise any or all of:

- cutting ("ToCut");
- folding ("ToFold");
- perforating ("ToPerforate");
- punching ("ToPunch");
- stapling ("ToStaple");
- stitching ("ToStitch");
- trimming ("ToTrim");
- further finishing actions as described in "JDF Specification", Release 1.5/Dec. 31, 2013 and/or in "JDF Specification" Release 1.6/Feb 28, 2018.

The terms in brackets ("ToCut", "ToFold" etc.) are symbolic descriptions for the actions as used e.g. in van Horssen et al.

In general, the finisher will have to be set up in a different way for the second print job than for the first print job. For example, elements for transporting intermediate products through the finisher (e.g. between at least two of the finishing devices, or within at least one of the finishing devices) may have to be adjusted based on the dimensions (length, width, thickness, ...) and/or other properties of the intermediate products.

In the above example for the first print job, booklets at least four sheets thick may have to be transported in the end, whereas in the second print job only single sheets may have to be transported. In these two cases, different distances between transport rollers and the like may have to be set up.

The time required for the setting-up of the finisher is usually called a finisher setup time FST. The setting-up of the finisher for the next print job can only start after the finisher has finished with the first print job at the (herein so-called) first time point t1. The setting-up of the finisher in general also includes a setting-up of the gathering station of the finisher, for example in order to receive sheets of differently-sized media.

The time point (herein designated as second time point t2) at which the gathering station of the finisher will be ready, or allowed to, receive a next set after the first time point t1, the next set being a first set of the second print job, will therefore in many embodiments be separated from the first time point t1 by at least the finisher setup time FST. In formulae:

$$t2 = t1 + FST + \Delta,$$

wherein $\Delta$ is preferably zero but may also be a positive number (i.e. represent an additional time span, e.g. a necessary delay due to other causes). $\Delta$ may also correspond to a time needed to transport a printed sheet from the printer to a near/off-line finisher. In order to make sure that no printed sheet of the recording medium arrives at the gathering station of the finisher before the gathering station is ready or allowed to receive additional sheets (or in other words, between the first time point t1 and the second time point t2), in the prior art there was a set delay after the first time point t1 for at least the finisher setup time FST before the next sheet of the medium was separated from the input module of the printer.

It should be understood that herein the separating of a sheet of a medium from the input module of the printer is considered to be the start of the printing process. However, it should be understood that the sheets gathered at the input medium of the input module of the printer need not be completely unprocessed sheets. In some variants or embodiments, additional devices of the printing system may be arranged in line before the printer for pre-processing the sheets of at least some media before they are fed into the input module of the printer.

Such pre-processing devices may also be considered to be part of the printer so that the input module of the printer may indeed comprise unprocessed sheets of the medium, which may or may not be processed in any way before the actual printing, that is marking, on the sheets of the medium. Similarly, between the actual printing and the finishing actions performed by the finisher, additional actions may be performed by the printer itself.

Referring back to the solution of the prior art, after the FST has passed after the second time point t2, the next sheet is separated from the input module of the printer, and is processed by the printer for a so-called first-print-out time FPOT until it arrives at the gathering station of the finisher. Said first-print-out time FPOT is essentially wasted in the prior art since the gathering station could have received the next sheet immediately at the second time point t2, as the inventors of the present invention have noticed.

According to the present invention, by contrast, the time difference between the first time point t1 and the second time point t2 is not left idle, but is used for other actions or operations in order to improve the efficiency of the printing system. In particular, two main ideas will be described in detail in the following:

a) to use the time difference t2-t1 to print a quality assurance sheet that is in any case desired to be printed from time to time, and
b) to use the time difference t2-t1 to already start printing the first set, or sets, of the next (i.e. the second) print job such that they arrive at, or only shortly after, the second time point t2 at the gathering station.

It should be understood that after the first print job in any case, either immediately or after at least one other action in between, the second print job will be printed. It should also be understood that the end of the second print job, if there is a third print job scheduled to be printed after the second print job, the same steps as described with respect to the first print job and the second print job may be performed again, with the second print job taking the role of the first print job and the third print job taking the role of the second print job, and so on for any number of print jobs in a queue of the printer controller.

It should also be understood that the present method does not have to be applied to every two consecutive print jobs, especially not in cases where the finisher setup time FST is zero, for example. Application of the method according to the present invention may thus in some embodiments be conditional on t2-t1 being larger than a predetermined threshold value.

According to a second aspect not claimed but being useful for understanding the invention, a printer controller for a printing system, the printing system including a printer with a medium input module and a finisher with a gathering station, is provided, which is configured to perform the method according to any embodiment of the first aspect of the present invention.

The invention may also provide, as a further aspect, a printer comprising a printer controller, the printer being according to claim 7.

Although designated as a printer controller (as is common in the field), the printer controller may be configured to control not only the printer but also the finisher. The printer controller may thus comprise a printer control module configured to control the printer and a finisher control module configured to control the finisher.

The printer controller may be realized in hardware, such as a circuit or a printed circuit board and/or comprising transistors, logic gates and other circuitry. Additionally or alternatively, the printer controller may be at least partially realized in terms of software. Accordingly, the printer controller may comprise, or be operatively coupled to, a processor and a memory storing a software or a firmware that is executed by the processor to perform the functions of the printer controller. Signals may be received by an input interface of the printer controller and signals that the processor of the printer controller creates may be outputted by an output interface of the printer controller. The printer controller may be implemented, at least partially, as a microcontroller, an ASIC, an FPGA and so on.

According to a third aspect of the invention, a printing system (or: a production line) is provided, which comprises a printer with a medium input module, a finisher with a gathering station and a printer controller according to claim 8.

According to a fourth aspect of the present invention, a computer program product is provided according to claim 9 and a further computer program is provided according to claim 10.

According to a fifth aspect of the present invention, a non-transitory computer-readable software medium is provided according to claim 11.

According to a sixth aspect of the present invention, a data stream is provided which carries the computer program product according to either of claims 9 and 10.

Additional advantages, and the solution of additional problems, will be apparent from the subject-matter of the dependent claims as well as from the description and the drawings.

In some advantageous embodiments, the determining of the second time point comprises providing a finisher setup time FST (or, more precisely: providing a time value for the finisher setup time FST) required by the finisher to set itself up for processing sets of the second print job.

Providing the finisher setup time FST may comprise reading the finisher setup time FST out of a database or may comprise executing or utilizing a software model simulating the printing system to retrieve the finisher setup time from it, preferably a software model as described in van Horssen et al., the contents of which are hereby incorporated by reference.

The determining of the second time point t2 may also comprise calculating the sum of the first time point t1 and the finisher setup time FST in order to arrive at the second time point t2, that is, calculating t2 = t1 + FST.

The finisher setup time FST can also be determined by maintaining a queue of jobs in a finisher controller module of a printer controller of the printing system. The finisher controller module may provide a system scheduler module of the printer controller with the finisher set-up time for each individual job. The finisher controller module may also use any other means to determine the finisher setup time FST for each queued job.

In some variants, the second time point t2 may be determined as being further removed from the first time point t1 than just by the finisher setup time FST for example when there are additional unavoidable delays, which prevent the gathering station of the finisher to receive the next set from the printer after the first time point t1.

In some advantageous embodiments, step f) comprises controlling the printing system to print on the separated at least one sheet of the medium between the first time point t1 and the second time point t2. This printing of the at least one sheet of the medium may be part of the printing of the first set of the second print job or may, as will be discussed in the following, be another type of print job, in particular a print job independent from any input to the printer and based solely on parameters and properties of the printer itself, such as a quality assurances sheet QAS. It is evident that in both of these cases the previously unused time difference of t2 - t1 between the first time point t1 and the second time point t2 (or even more) is advantageously put to use, increasing total efficiency of the printing system as a whole.

In the invention, the method further comprises the following steps:

- providing a first-print-out time FPOT (or, more precisely: providing a value for the first-print-out time FPOT), indicating how much time a sheet of the medium requires to arrive at the gathering station of the finisher after being separated from the medium input module;

- determining a third time point t3, between the first time point t1 and the second time point t2, at which separating of the at least one sheet of the medium in step f) for printing of the next set has to be started such as to arrive at a predetermined PDT time at or after the second time point t2 and the gathering station of the finisher, based on the provided first-print-out time FPOT.

The first-print-out time FPOT is generally a known specification sheet item of the printer of the printing system. It is usually determined by, or defined as, the fastest time to print a sheet with a printer.

Preferably, the predetermined time PDT is exactly at the second time point t2 such that the third time point t3 is determined such that a sheet of the medium separated from the input module at the third time point t3 arrives exactly at the second time point t2 at the gathering station of the finisher, thus eliminating any unnecessary idle time.

In particular, the third time point t3 may be determined by subtracting the first-print-out time FPOT from the second time point t2 (or, optionally, from the second time point t2 plus the predetermined time PDT). Thus, the third time point t3 may be preferably determined by:

$$t3 = t2 + PDT - FPOT,$$

wherein the predetermined time PDT is zero or positive, and wherein the predetermined time PDT will preferably be smaller than FPOT, for example, $PDT = 0.1 * FPOT$.

Then, in step f), the printing system is advantageously controlled to start separating the at least one sheet of the medium for printing the next set at the third time point t3. In this way, the previously unused idle time of the printer between the first time point t1 and the second time point t2 will be reduced by e.g. the first-print-out time FPOT.

In the invention, the method further comprises the following steps: providing a trigger time TRT (or: a trigger time value) which indicates after how long of an idle time of the printer the printer is configured to commence a maintenance action, in particular in order to prevent deterioration of at least one part of the printer, for example, of at least one print head of the printer.

Printer controllers are usually programmed to perform such maintenance actions after time longer than the trigger time TRT has been spent idle by the printer, for example in order to prevent blocking of nozzles of print heads of inkjet printers. As a simple example, the trigger time TRT may be set for the printing system to a value between 20 and 60 seconds, especially between 30 and 50 seconds, in particular to 40 seconds of idle time of the printer.

In a further step, a fourth time point t4 at which a sheet of the medium will be printed next (or: at which it is expected that a sheet of the medium will be printed next) is determined. In other words, a prognosis is made about the next time point (i.e. the fourth time point t4) at which, if the current controlling of the printing system by the printer controller remains unchanged, a sheet will be printed by the printing system. The fourth time point t4 may be determined, for example, based on the previously mentioned software model of van Horssen et al. which is capable of simulating the actions of the printing system.

As has been described in the foregoing, after the first time point t1 the next printing of at least one sheet of the medium may be separated from the first time point t1 by at least the finisher setup time FST. In the advantageous embodiments described in the foregoing, the otherwise unused time between the first time point t1 and the second time t2 point may be utilized at least to some degree by starting to separate at least one sheet of the medium already at the third time point t3, which is set before the second time point t2. This means that still there will be no printing of any sheet of the medium for at least the time between the first time point t1 and the third time point t3. Even in that very efficient arrangement, it may still happen that the time difference between the first time point t1 and the time the sheet separated at time point t3 is printed, or even between the first time point t and the third time point t3, is larger than the provided trigger duration value.

In a further step, after the fourth time point t4 has been determined, a time (or: time difference) ΔT between the first time point t1 and the fourth time point t4 is calculated: $\Delta T = t4 - t1$. This time difference ΔT indicates then how long the printer will be idle if the current controlling of the printing system by the printer controller remains unchanged.

In a further step, the calculated time (or: time difference) is compared to the provided trigger time TRT.

Advantageously, when the provided trigger time TRT is shorter than the calculated time (or: time difference), i.e. when $TRT < \Delta T$, then in step f) the printing system is controlled to separate a sheet of the medium from the input module and to print thereon a quality assurance sheet before time equal to the provided trigger time TRT has passed after the first time point t1. If a time needed for a sheet from the input module until it is printed is designated as a time-to-print-after-separation TPS this means separating the sheet on which the quality assurance sheet is to be printed from the input module of the printer at the latest at a time point t4 - TPS. Thus, the controlling of the separating of the sheet on which the quality assurance sheet is to be printed may be based on the fourth time point t4 as well as on the time-to-print-after-separation, TPS.

In this way, the idle time of the printer will be restricted to a value smaller than the trigger time TRT such that actually no maintenance action is started. Since often the maintenance action takes longer than the trigger time TRT in the first place, in this way as significant increase in efficiency is achieved, while at the same time a useful quality assurance sheet is produced.

The quality assurance sheet may be any type of predefined or adjustable pattern or design that is useful for a supervisor or for an automated quality assurance system, e.g. based on visual inspection, to determine a state of the printer, in particular a state of the print heads of the printer.

According to the invention, the printed quality assurance sheet is transported to an output separate from the gathering station of the finisher. In this way, it is prevented that the quality assurance sheet will arrive at the gathering station, which may not yet be ready to receive further sheets (e.g. before the second time point) or where it may not be desired that the quality assurance sheet is arranged between the printed sets of the print jobs.

In some advantageous embodiments, the fourth time point t4 is a time point at which the printer prints on the at least one sheet separated from the input module at the third time point t3, for example $t4 = t3 + TPS$.

In other words, the method may be implemented such that first it is tried to reduce idle time by determining the third time point t3 and separating at least one sheet of the medium at the third time point t3, as described above. Then, as the fourth time point t4 it may be determined at which time point the printer actually prints on the at least one sheets separated at the third time point t3. In general, this will be $t4 = t3 + TPS$.

It may then be that the fourth time point t4 is removed from the first time point by less than the trigger time TRT i.e. $\Delta T < TRT$ or, written explicitly, $t3+TPS-t1 < TRT$. If not, then an additional sheet of the medium may be separated from the input module between the first time point t1 and the third time point t3 in order to print on it a quality assurance sheet before the time spent according to the provided trigger time TRT has passed after the first time point t1. In this way, the previously (in the prior art) idle time between the first time point t1 and the second time point t2 will be used not only to start printing of the next set earlier, but also to produce the in any case desired quality assurance sheet.

In some advantageous embodiments, the method according to the first aspect of the present invention may further comprise the following steps, when a particular set of any print job comprises a plurality of sheets to be printed:
In one step a tamper time TAT (or: tampering time TAT) indicating a time that a sheet of said particular set has to remain in the gathering station of the finisher before it can be processed by the rest of the finisher. The tamper time TAT is generally necessary for example when a set comprises multiple sheets between which air has to escape before the set can be further processed by the rest (i.e. excluding the gathering station) of the finisher.

In a further step, a fifth time point t5 is determined at which the rest of the finisher is next ready, or allowed to, receive sheets from the gathering station. When the finisher comprises a single finishing device apart from the gathering station, the fifth time point t5 may be identical to the time point at which the single finishing device has completely finished the currently processed set.

However, when the finisher comprises a plurality of finishing devices, it may be possible for a first finishing device of the finisher in line to receive new sheets from the gathering station after it has transmitted its currently finished set to the next finishing device in line of the finisher. In another step, a sixth time point is determined, which precedes the fifth time point by the provided tamper time value. In other words, a sixth time point t6 is calculated by $t6 = t5 - TAT$.

In another step, the printing system is controlled to separate a sheet of medium for the last sheet of the particular set (comprising a plurality of sheets to be printed) such that it arrives at the sixth time point t6 at the gathering station. In this way, even the processing of a single particular set is performed efficiently and without any unnecessary loss of time.

In some advantageous embodiments, any or all of the time points t1, t2, t3, t4, t5, and/or t6 and/or times (FPOT, FST, TRT, TAT, and/or TPS) mentioned in the foregoing or in the following are determined based on a software model simulating the printing system, or, in other words, a software model designed to simulate the printing system. In particular, a software model as described in van Horssen et al. (US 2017/0206041 A1) may be used.

The software model, which may also be designated a printing and finishing production line, PFPL, model, is preferably composed of a sequence of actions performed on sheets. Such actions may, for example, comprise a printing action ("To Print"), a rotating action ("To Rotate"), a gathering action ("To Gather"), a stitching action ("To Stitch") and so on. The time needed by an action to perform its own process on a stack of at least one sheet (depending on what the specific action is intended to target), can be designated as an action cyclic time, ACT. A printing and finishing production line, PFPL, represents the entirety of actions performed by the printing system. The production lead time, PLT, which is the time needed for a sequence of actions to assemble and process initial resources for creating the desired end product is then composed of a sequence of ACTs.

An ACT may comprise, or consist of, a fixed part and/or a variable part. A fixed part is always the same regardless of the end product that is to be produced. The variable part typically depends on action parameters of the respective actions. Advantageously, sheets transport time between actions are considered as part of a fixed part of the global PLT such that the ACTs only consist of the time the sheets actually spend in the respective process and not the time the sheets spend in between the actions.

It should be understood that herein, if not explicitly described or implicitly evident otherwise, the term "time point" refers to a specific point in time such as "3 o'clock sharp" or "15 seconds after event X", whereas the term "time" usually refers to a duration, like the terms first-print-out time FPOT or finisher setup time FST.

## BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:

Fig. 1    shows a schematic flow diagram illustrating a method according to an embodiment of the first aspect of the present invention;

Fig. 2    shows a schematic block diagram illustrating a printing system according to the third aspect of the present invention and a printer controller according to an embodiment of the second aspect;

Fig. 3    shows a schematic flow diagram illustrating a method according to another embodiment of the first aspect of the present invention;

Fig. 4    shows a schematic flow diagram illustrating a method according to yet another embodiment of the first aspect of the present invention;

Fig. 5    shows a schematic flow diagram illustrating advantageous steps to be performed in embodiments of the method according to the first aspect of the present invention;

Fig. 6    shows a schematic block diagram of a computer program product according to an embodiment of the fourth aspect of the present invention; and

Fig. 7    shows a schematic block diagram of a non-transitory computer-readable data storage medium according to an embodiment of the fifth aspect of the present invention.

## DETAILED DESCRIPTION OF THE DRAWINGS

The present invention will now be described with reference to the accompanying drawings, wherein the same reference numerals have been used to identify the same or similar elements throughout the several views, and in some instances throughout the several embodiments. The numbering of method steps is, if not explicitly or implicitly described otherwise, not intended to necessarily indicate a time ordering of steps. In particular, several steps may also be performed simultaneously.

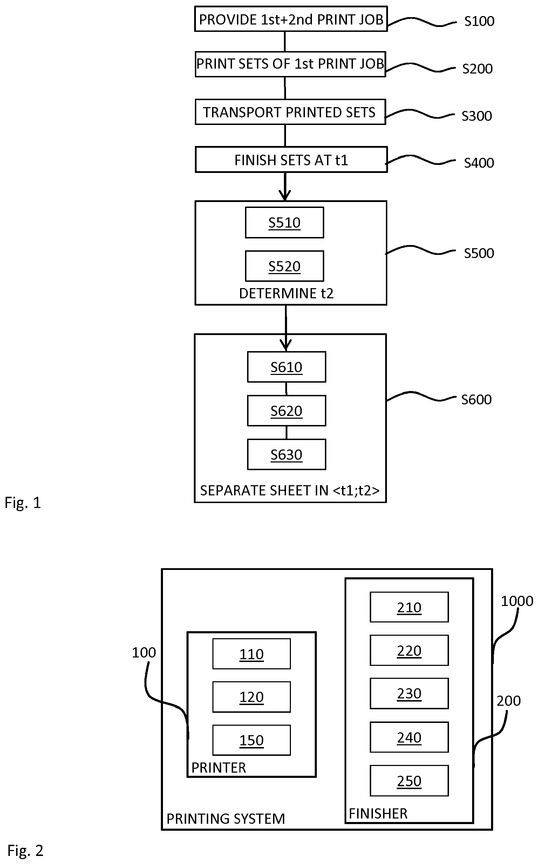

Fig. 1 shows a schematic flow diagram illustrating a method according to an embodiment of the first aspect of the present invention for operating a printing system for printing on sheets of a medium, the printing system including a printer with a medium input module and a finisher with a gathering station.

In the embodiment presented with respect to Fig. 1, the main goal is to utilize a time delay mainly due to the finisher setup time FST to already start a next printing process, i.e. to already separate a next sheet from the input module, so that a printed sheet arrives at the gathering station of the finisher (ideally) as soon as the gathering station is ready to receive it.

In describing the method according to Fig. 1, reference will also be made to elements and reference signs shown in Fig. 2.

Fig. 2 shows a schematic block diagram illustrating a printing system 1000 according to the third aspect of the present invention. The printing system 1000 comprises a printer 100 and a finisher 200. The printer 100 comprises an input module 110 from which sheets of a medium may be separated for printing thereon. The printer 100 and the finisher 200 are configured and arranged such that sheets of the medium printed by the printer 100 may be transported to the finisher 200 without human intervention or interaction. The printer 100 may optionally also comprise a separate output 120 for outputting printed sheets that are not intended to be transported to the finisher 200, as will be described in more detail in the following.

The finisher 200 may comprise several finishing devices such as a gathering station 210, a folding device 220, a cutting device (or: cutter) 230, a trimming device 240, a punching device 250 and/or the like. Of any of the finishing device a plurality may be present. For example, each of the finishing devices may have its own gathering station. The printing system 1000 also comprises a printer controller 150 according to an embodiment of the second aspect which may be, partially or completely, integrated into the printer 100. The printer controller 150 may also be realized in a distributed way, e.g. as a program run by a remote server such as a cloud computing platform.

Although in the following the method according to Fig. 1 will be described also with reference to elements of Fig. 2, the method is not restricted to being performed by or with the elements shown or described in connection with Fig. 2. However, the method according to Fig. 2 can be performed, or executed, by, or for, the printing system 1000 as shown in Fig. 2 and can be adapted or modified according to any options, modifications, variations and embodiments as described for the printing system 1000 and its sub-components and vice versa.

Referring now to Fig. 1 again, in a step S100, a first print job including at least one set to be printed and a second print job including at least one set to be printed are provided.

In a step S200, all sets of the first print job (or the one set if there is only one set) are printed.

In a step S300, the printed sets of the first print job are transported to the gathering station 210 of the finisher 200, including transporting the printed last set of the first print job to the gathering station 210 of the finisher 200.

In a step S400, the printed sets of the first print job are processed by the finisher 200, finishing said processing at a first time point t1. In other words, the first time point t1 is defined by the time point at which the finisher 200 has finished processing a last set of the first print job.

In a step S500, a second time point t2 is determined at which the gathering station 210 of the finisher 200 will be (or: is expected to be) ready to, or allowed to, receive a next set from the printer 100 after the first time point t1, the next set being a first set of the second print job.

Determining S500 the second time point t2 may in particular comprise providing, in a step S510, a finisher setup time FST which, as has been described in the foregoing, indicates a time (or: period) required by the finisher 200 to set itself up to processing sets of the second print job after having processed sets of the first print job. If the first and a second print job require the exact same settings of the finisher 200, then the FST value will generally be zero. In many cases, however, the finisher 200 will be required to make at least some adjustments to its setup so that the FST value will be larger than zero.

As has been described in the foregoing, any or all of the time points and/or times mentioned herein may be determined based on a software model simulating the printing system 1000 or simulating actions performed by the printing system 1000, in particular by a model as described in van Horssen et al.

In a step S520, the second time point t2 may be calculated based on the first time point t1 and the finisher setup time FST. In particular, the second time point t2 may be calculated as a sum of at least the first time point t1 and the finisher setup time FST, in particular as a sum of the first time point t1 and the finisher setup time FST, i.e. as t2 = t1 + FST.

In a step S600, the printing system 1000 is controlled to separate at least one sheet of the medium from the medium input module 110 between the first time point t1 and the second time point t2 for printing thereon.

In the embodiment discussed with respect to Fig. 1, step S600 comprises the following sub-steps:

In a step S610, a first-print-out time FPO indicating how much time a sheet of the medium requires to arrive at the gathering station 210 of the finisher 200 after being separated from the medium input module 110 is provided, e.g. by the software model.

In a step S620, a third time point t3 between the first time point t1 and the second time point t2 is determined. The third time point t3 is determined as a time point at which separating of the at least one sheet of the medium in step S600 for printing of the next set has to be started such as to arrive at a predetermined time PDT at or after the second time point t2

at the gathering station 210 of the finisher 200, based on the provided first-print-out time FPO.

In other words, the third time point t3 is determined such that, when a sheet is separated from the input module 110 at the third time point t3 and is printed on thereafter, it will arrive at the gathering station 210 at a time point of t2 + PDT. PDT is preferably smaller than the first-print-out time FPO which is the time necessary for a sheet to arrive at the gathering station 210 after having been separated from the input module 110 because the third time point t3 is between the first time point t1 and the second time point t2. Preferably, PDT is as small as possible and is most preferably essentially zero. In the latter case, the next sheet arrives at the gathering station 210 exactly at the second time point t2, i.e. exactly when the gathering station 210 is ready to receive it.

Since in the prior art the separating of the next sheet is started only at the end of the finisher setup time FST, the time gain generated by the present method is therefore equal to FST - PDT.

Then, in a step S630, the printing system 1000 is controlled, e.g. by the printer controller 150, to start separating the at least one sheet of the medium for printing the next set (i.e. the first set of the second print job) at the third time point t3. Preferably, said sheet is printed on between the first time point t1 and the second time point t2.

Thereafter, printing of the second print job may continue. At the end of the second print job, if there is a third print job scheduled to be printed after the print job, the same steps S200 to S600 may be performed again, with the second print job taking the role of the first print job and the third print job taking the role of the second print job.

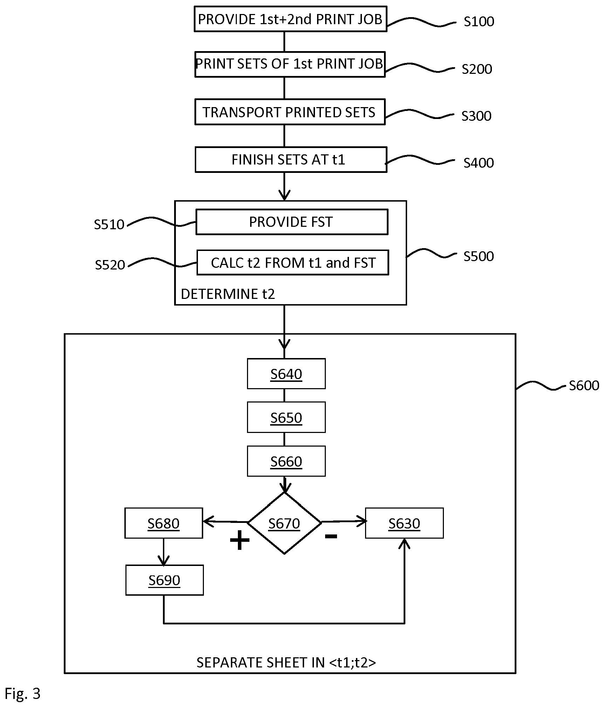

Fig. 3 shows a schematic flow diagram illustrating a method for operating a printing system 1000 for printing on sheets of a medium, the printing system 1000 including a printer 100 with a medium input module 110 and a finisher 200 with a gathering station 210. Again, for describing the embodiment illustrated by Fig. 3, mention will be made of objects in and reference signs of Fig. 2 for the sake of improved clarity and conciseness.

In the embodiment presented with respect to Fig. 3, the main goal is to prevent a maintenance action from being started simply because of an idle time that is caused by a required finisher setup time FST exceeding a trigger time TRT indicating after how long of an idle time of the printer 100 the printer 100 is configured to commence a maintenance action in order to prevent deterioration of at least one part of the printer 100, in particular of at least one print head of the printer, as has been described in the foregoing in more detail.

The method illustrated in Fig. 3 differs from the method shown in Fig. 1 by the realization of step S600. Steps S100 to S500 are performed as described with respect to Fig. 1 and Fig. 2.

Then, in the method of Fig. 3, step S600 comprises the following steps:

In a step S640, a trigger time TRT is provided indicating after how long of an idle time of the printer 100 the printer 100 is configured to commence a maintenance action in order to prevent deterioration of at least one part of the printer 100. The trigger time TRT may be stored as a constant in a memory of the printer 100 and/or of the printer controller 150 and/or a memory accessible to the printer 100 and/or the printer controller 150.

The printer 100 being configured to commence the maintenance action after an idle time exceeding the trigger time may be realized by an internal programming of the printer 100 itself, i.e. the printer 100 may comprise a counting module measuring each idle time of the printer 100, a comparison module comparing the measured idle time to the stored constant trigger time TRT and a maintenance module triggering a maintenance action as soon as the measured idle time exceeds the trigger time TRT. Alternatively, the printer 100 may be configured to commence the maintenance action after an idle time exceeding the trigger time by the printer controller 150 comprising (or implementing, e.g. as software modules) said counting module, comparison module and maintenance module.

As another alternative, some of said modules may be realized by, or integrated in, the printer 100, and others (or all) may be realized by the printer controller 150. For example the counting module may be integrated into the printer 100 which constantly or regularly communicates the measured idle time to the printer controller 150, and the comparison module and the maintenance module may be realized by the printer controller 150.

In a step S650, a fourth time point t4 at which a sheet of the medium will be printed next is determined, e.g. utilizing said software model.

In a step S660, after the fourth time point t4 has been determined in step S650, a time (or: time difference) $\Delta T$ between the first time point t1 and the fourth time point t4 may be calculated: $\Delta T = t4 - t1$. This time difference $\Delta T$ indicates then how long the printer will be idle if the current controlling of the printing system by the printer controller remains unchanged.

In a step S670, the calculated time (or: time difference) $\Delta T$ is compared to the provided trigger time TRT, or, in other words, it is determined whether the calculated time $\Delta T$ is larger than the provided trigger time TRT or not.

If and when it is determined in step S670 that the calculated time $\Delta T$ is larger than, or equal to, the trigger time TRT, $\Delta T \geq$ TRT, (indicated by a plus sign in Fig. 3), i.e. when, if everything remains unchanged, the printer 100 will commence the maintenance action after passing of the trigger time TRT, then the printing system 1000 is controlled (e.g. by the printer controller 150) to separate, in a step S680, a sheet of the medium from the input module 110 and to print thereon, in a step S690, a quality assurance sheet before time equal to the provided trigger time TRT has passed after the first time point t1. After step S690, printing of the second print job is commenced with separating, in a step S630, the next sheet of the medium, e.g. as described with respect to Fig. 1.

If a time needed for a sheet from its separation from the input module until it is printed is designated as a time-to-print-after-separation TPS, this means separating 680 the sheet on which the quality assurance sheet is to be printed in step S690 from the input module 110 of the printer 100 at the latest at a time point t4 - TPS. In other words, the controlling of the separating of the sheet on which the quality assurance sheet is to be printed in step S690 is preferably based on the fourth time point t4 as well as on the time-to-print-after-separation, TPS.

In this way, the idle time of the printer will be restricted to a value smaller than the trigger time TRT such that actually no maintenance action is started. Since often the maintenance action takes longer than the trigger time TRT in the first place, in this way as significant increase in efficiency is achieved, while at the same time a useful quality assurance sheet is produced.

The quality assurance sheet may be any type of predefined or adjustable pattern or design that is useful for a supervisor or for an automated quality assurance system, e.g. based on visual inspection, to determine a state of the printer 100, in particular a state of the print heads of the printer 100.

The printed quality assurance sheet is advantageously transported to the output separate output 120 of the printer 100, instead of to the gathering station 210 of the finisher 200. In this way, it is prevented that the quality assurance sheet will arrive at the gathering station 210, which may not yet be ready to receive further sheets (e.g. before the second time point t2) or where it may not be desired that the quality assurance sheet is arranged between the printed sets of the actual print jobs.

If and when it is determined in step S670 that the calculated time $\Delta T$ is smaller than the trigger time TRT, $\Delta T <$ TRT, (indicated by a minus sign in Fig. 3), .i.e. when, if everything remains unchanged, the printer 100 will not commence the maintenance action before the next sheet is printed, then printing of the second print job is commenced in a step S630 with separating the next sheet of the medium, e.g. as described with respect to Fig. 1.

For example, a size change of a gathering station from A4 format to an SRA3 format takes 45 seconds of finisher setup time FST, a maintenance action may take two minutes and the trigger time TRT may be set to 40 seconds of idle time for the printing system 1000. In the printing systems according to the state of the art, then because of the finisher setup time FST of at least 45 seconds, the trigger time TRT of 45 seconds will be exceeded and the maintenance action will be triggered such that the actual downtime of the printing system 1000 is not about 45 seconds, but actually the trigger time TRT of 40 seconds plus the duration of two minutes of the maintenance action.

Instead, according to the method of Fig. 3, only about 45 seconds or even less will be spent without printing sets of print jobs, while at the same time a quality assurance sheet is produced that has use in and of itself. In particular, quality assurance sheets are usually desired to be printed every few hundred prints in any case, wherein the printing of the quality assurance sheets takes away further valuable time from printing of actual print jobs. In this way, the presently described method both prevents an unnecessary maintenance action and provides the anyway desired quality assurance sheet without any additional loss of time.

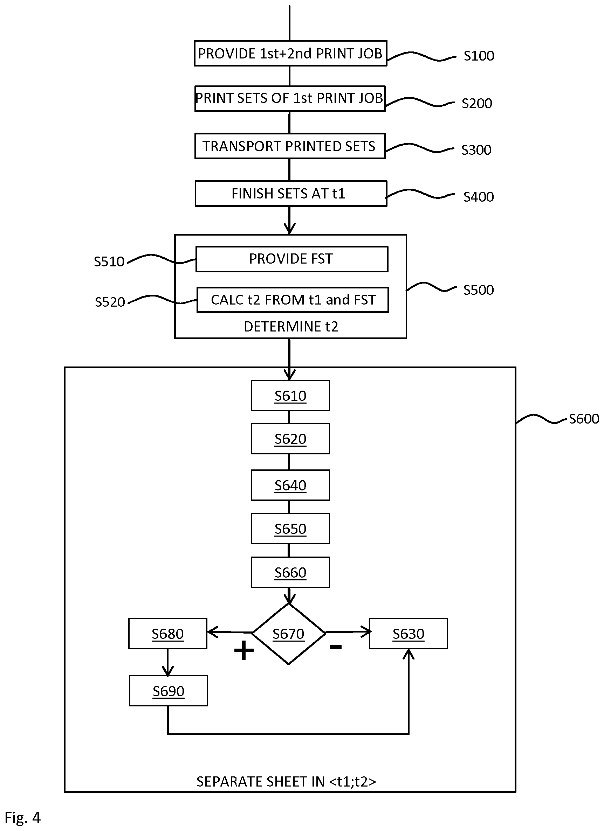

Fig. 4 shows a schematic flow diagram illustrating a method according to yet another embodiment of the first aspect of the present invention for operating a printing system for printing on sheets of a medium.

The method of Fig. 4 is a combination of the methods described with respect to Fig. 1 to Fig. 3 in that it combines both the ideas as discussed with respect to Fig. 1 and the ideas discussed with respect to Fig. 3.

Steps S100 to S500 are performed as described with respect to Fig. 1 and Fig. 2.

Then, as part of step S600, steps S610, S620 and 640 are performed as previously described.

Then, step S650 is performed, wherein the fourth time point t4 at which a sheet of the medium will be printed next is determined, e.g. utilizing said software model. Now, in step S650 the fourth time point t4 will in general be a time point at which the sheet which is intended for the first set of the second print job is to be separated at the third time point t3. In other words, since steps S620 is intended to shorten the idle time of the printer 100, in general the next time at which a sheet will be printed will be sooner because of step S620. Yet in other words, the fourth time point t4 will in general be t4 = t3 + TPS.

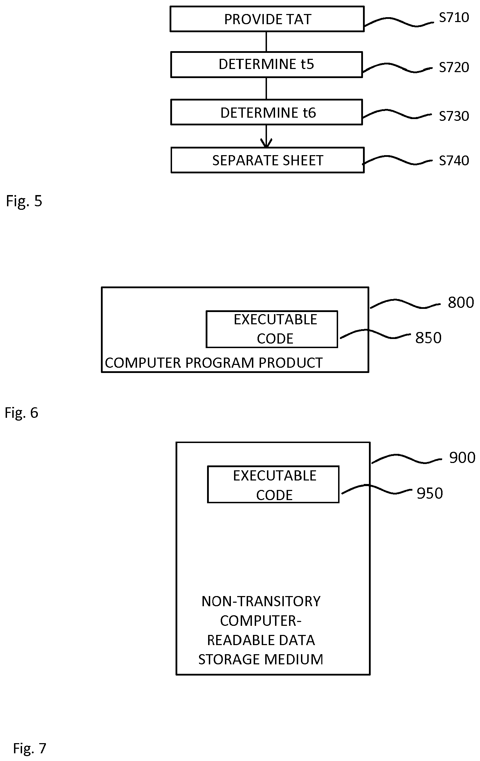

Then, steps S660 and S670, and then steps S680 and S690 or S630 may be performed accordingly. In other words, segmenting in step S630 a sheet from the input module 110 already at the third time point t3 may reduce the idle time already below the trigger time TRT so that no printing S690 of the quality assurance sheet is necessary to prevent the maintenance action. However, if not (e.g. when t3 + TPS - t1 ≥ TRT), then step S680 and S690 may still be performed. Fig. 5 shows a schematic flow diagram illustrating advantageous steps to be performed in embodiments of the method according to the first aspect of the present invention during printing of any print job when the sets of that print job comprise a plurality of sheets to be printed (herein designated as multi-sheet sets):

In a step S710, a tamper time TAT (or: tampering time TAT) indicating a time that a sheet of said particular set has to remain in the gathering station 210 of the finisher 200 before it can be processed by the rest of the finisher 200 is provided, e.g. read out from a database or determined using said software model simulating the printing system 1000. The tamper time TAT is generally necessary for example when a set comprises multiple sheets between which air has to escape before the set can be further processed by the rest (i.e. excluding the gathering station 210) of the finisher 200.

In a step S720, a fifth time point t5 is determined at which the rest of the finisher 200 is next ready, or allowed to, receive sheets from the gathering station 210. When the finisher 200 comprises a single finishing device 220, 230, 240, 250 apart from the gathering station 210, the fifth time point t5 may be identical to the time point at which the single finishing device 220, 230, 240, 250 has completely finished the currently processed set.

However, when the finisher 200 comprises a plurality of finishing devices 220, 230, 240, 250, it may be possible for a first finishing device 220, 230, 240, 250 of the finisher 200 in line to receive new sheets from the gathering station 210 after it has transmitted its currently finished set to the next finishing device 220, 230, 240, 250 in line of the finisher 200.

In a step S730, a sixth time point t6 is determined, which precedes the fifth time point by the provided tamper time TAT. In other words, the sixth time point t6 is calculated by:

$$t6 = t5 - TAT.$$

In a step S740, the printing system 1000 is controlled, e.g. by the printer controller 150, to separate a sheet of medium for the last sheet of the multi-sheet set such that it arrives at the sixth time point t6 at the gathering station 210. In this way, even the processing of a single multi-sheet set is performed efficiently and without any unnecessary loss of time. It will be understood that step S740 may cause a change in the determining of the fourth time point t4 in step S650.

The printer controller 150 may be configured to perform any or all of the methods described herein, in particular with respect to Fig. 1 to Fig. 5. In particular, the printer controller 150 may be adapted or modified according to any options, variations or embodiments described for the method according to the first aspect of the present invention and vice versa.

Fig. 6 shows a schematic block diagram illustrating a computer program product 800 according to an embodiment of the fourth aspect of the present invention. The computer program product 800 comprises executable code 850 configured to, when executed, perform the method according to an embodiment of the first aspect, e.g. as described with respect to the printing system 1000, the printer controller 150, or the method described with respect to any of Fig. 1 to Fig. 5 and/or according to any of the variants and modifications of the printing system 1000, the printer controller 150 and/or of the method described herein.

Fig. 7 shows a schematic block diagram illustrating a non-transitory computer-readable data storage medium 900 according to an embodiment of the fifth aspect of the present invention. The non-transitory computer-readable data storage medium 900 comprises executable code 950 configured to, when executed, perform the method according to an embodiment of the first aspect, e.g. as described with respect to the printing system 1000, the printer controller 150, or the method described with respect to any of Fig. 1 to Fig. 5 and/or according to any of the variants and modifications of the printing system 1000, the printer controller 150 and/or of the method described herein.

The non-transitory computer-readable data storage medium 900 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

While detailed embodiments of the present invention are disclosed herein, it is to be understood that the disclosed embodiments are merely exemplary of the invention, which can be embodied in various forms. Therefore, specific structural and functional details disclosed herein are not to be interpreted as limiting, but merely as a basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

It will be evident that the described embodiments may be varied in many ways.

One basic idea of the invention may be summarized as follows: time ordinarily spent idle by a printer because of a necessary setup time by the finisher is utilized to make more efficient use of time. The otherwise idle time may be used to start printing a sheet of the next print job sooner, or may be used to print a quality assurance sheet that is desired or even necessary in any case. Measures can also be taken to prevent maintenance actions that can take a lot of time by rendering the idle time of the printer shorter than a trigger time that triggers the maintenance action.

**Claims**

1. Method for operating a printing system (1000) for printing on sheets of a medium, the printing system (1000) including a printer (100) with a medium input module (110) and a finisher (200) with a gathering station (210), the method comprising the steps of:

a) providing (S100) a first print job including at least one set to be printed and a second print job including at least one set to be printed;
b) printing (S200) all sets of the first print job;
c) transporting (S300) the printed sets of the first print job to the gathering station (210) of the finisher (200);
d) processing (S400) the printed sets of the first print job by the finisher (200), finishing said processing at a first time point (t1);
e) determining(S500) a second time point (t2) at which the gathering station (210) of the finisher (200) will be ready to, or allowed to, receive a next set from the printer (100) after the first time point (t1), the next set being a first set of the second print job;
f) providing (S610) a first-print-out time FPOT indicating how much time a sheet of the medium requires to arrive at the gathering station (210) of the finisher (200) after being separated from the medium input module (110);
g) determining (S620) a third time point (t3), between the first time point (t1) and the second time point (t2), at which separating (S630) of the at least one sheet of the medium in step h) for printing of the next set has to be started such as to arrive at a predetermined time PDT at or after the second time point (t2) at the gathering station (210) of the finisher (200), based on the provided first-print-out time FPOT;
h) controlling (S600) the printing system (1000) to separate (S630, S680) at least one sheet of the medium from the medium input module (110) at the third time point (t3) for printing thereon, the method **characterized in that**:

i) providing (S640) a trigger time TRT indicating after how long of an idle time of the printer (100) the printer (100) is configured to commence a maintenance action;
j) determining (S650) a fourth time point (t4) at which a sheet of the medium will be printed next;
k) calculating (S660) a time between the first time point (t1) and the fourth time point (t4); and
l) comparing (S670) the calculated time with the provided trigger time TRT;

wherein, when the provided trigger time TRT is shorter than the calculated time, in step h) the printing system (1000) is controlled to separate (S680) a sheet of the medium and to print (S690) a quality assurance sheet thereon before time equal to the provided trigger time TRT has passed after the first time point (t1), and wherein the printed quality assurance sheet is transported to an output (120) separate from the gathering station (210) of the finisher (200).

2. The method of claim 1,
wherein the determining (S500) of the second time point (t2) comprises providing a finisher setup time FST indicating a time required by the finisher (200) to set itself up for processing sets of the second print job.

3. The method of claim 1 or claim 2,
wherein step h) comprises controlling (S690) the printing system (1000) to print on the separated at least one sheet of the medium at the third point (t3).

4. The method of claim 1,
wherein the fourth time point (t4) is a time point at which the printer (100) prints on the at least one sheet separated from the input module (110) at the third time point (t3).

5. The method of any one of claims 1 to 4,
further comprising, when a particular set of any print job comprises a plurality of sheets to be printed, the steps of:

   providing (S710) a tamper time TAT indicating a time that a sheet of said particular set has to remain in the gathering station (210) of the finisher (200) before it can be processed by the rest of the finisher (200);
   determining (S720) a fifth time point (t5) at which the rest of the finisher (200) is next ready, or allowed to, receive sheets from the gathering station (210);
   determining (S730) a sixth time point (t6) which precedes the fifth time (t5) point by the provided tamper time TAT;
   controlling (S740) the printing system (1000) to separate a sheet of the medium for the last sheet of said particular set such that it arrives at the sixth time point (t6) at the gathering station (210).

6. The method of any of claims 1 to 5,
wherein any or all of the time points and/or times are determined based on a software model simulating the printing system (1000).

7. A printer (100) comprising a medium input module (110), a separate output module (120) and a printer controller (150),wherein the printer (100) is part of a printing system (1000) further including a finisher (200) with a gathering station (210), wherein:

   - the print controller (150) is configured to perform the steps a), e) - l) of the method according to any one of the claims 1 to 6,
   - the printer (100) is configured to perform the step b) of the method according to any one of claims 1 to 6, and
   - the quality assurance sheet is transported to the separate output module (120).

8. A printing system (1000) comprising:

   a printer (100) with a medium input module (110);
   a finisher (200) with a gathering station (210); and
   a printer controller (150), wherein:

   - the printer(100) is configured to perform the step b) of the method according to any one of claims 1 to 6,
   - the finisher (200) is configured to perform the step d) of the method according to any one of claims 1 to 6,
   - the printer controller (150) is configured to perform the steps a), e) - l) of the method according to any one of claims 1 to 6, and
   - wherein the printed quality assurance sheet is transported to an output separate from the gathering station of the finisher.

9. A computer program (800) comprising executable program code (850) comprising instructions which, when executed by the printer of claim 7, cause the printer to perform steps a), b), e) - l) of the method according to any one of claims 1 to 6.

10. A computer program (800) comprising executable program code (850) comprising instructions which, when executed by the printing system of claim 8, cause the printing system to perform the method according to any one of claims 1 to 6.

11. A non-transitory computer-readable software medium (900) comprising the computer program of one of claims 9 and 10.

**Patentansprüche**

1. Ein Verfahren zum Betreiben eines Drucksystems (1000) zum Drucken auf Bögen eines Mediums, wobei das Drucksystem (1000) einen Drucker (100) mit einem Medieneingabemodul (110) und einem Finisher (200) mit einer Sammelstation (210) aufweist, welches Verfahren die folgenden Schritte aufweist:

   a) bereitstellen (S100) eines ersten Druckauftrags, der wenigstens einen zu druckenden Satz enthält, und eines zweiten Druckauftrags, der wenigstens einen zu druckenden Satz enthält,
   b) drucken (S200) aller Sätze des ersten Druckauftrags,

c) transportieren (S300) der gedruckten Sätze des ersten Druckauftrags zu der Sammelstation (210) des Finishers (200);

d) bearbeiten (S400) der gedruckten Sätze des ersten Druckauftrags durch den Finisher (200), beenden dieser Bearbeitung zu einem ersten Zeitpunkt (11);

e) bestimmen (S500) eines nach dem ersten Zeitpunkt (11) liegenden zweiten Zeitpunkts (t2) an dem die Sammelstation (210) des Finishers (200) bereit oder in der Lage ist, einen nächsten Satz von dem Drucker (100) zu empfangen, wobei der nächste Satz der erste Satz des zweiten Druckauftrags ist,

f) bereitstellen (S610) einer ersten Druckzeit FPOT, die angibt, wieviel Zeit ein Bogen des Mediums benötigt, an der Sammelstation (210) des Finishers (200) einzutreffen, nachdem er aus dem Medieneingabemodul (110) aufgenommen wurde;

g) bestimmen eines zwischen dem ersten Zeitpunkt (11) und dem zweiten Zeitpunkt (t2) liegenden dritten Zeitpunkts (t3), zu dem das Aufnehmen (S630) des wenigstens einen Bogens des Mediums in Schritt a) zum Drucken des nächsten Satzes eingeleitet werden muss, damit der Bogen zu einer vorbestimmten Zeit PDT an dem zweiten Zeitpunkt (t2) oder später an der Sammelstation (210) des Finishers (200) eintrifft, basierend auf der bereitgestellten ersten Druckzeit FPOT,

h) ansteuern (S600) des Drucksystems (1000) zum Aufnehmen (S630, S680) wenigstens eines Bogens des Mediums aus dem Medieneingabemodul (110) zu dem dritten Zeitpunkt (t3), um darauf zu drucken;

wobei das Verfahren **dadurch gekennzeichnet ist, dass**:

    i) bereitstellen (S640) einer Auslösezeit TRT, die angibt, nach einer wie langen Leerlaufzeit des Druckers (100) der Drucker (100) dazu konfiguriert ist, eine Wartungsaktion zu beginnen;

    j) bestimmen (S650) eines vierten Zeitpunkts (t4), zu dem ein Bogen des Mediums als nächstes gedruckt werden wird,

    k) berechnen (S660) einer Zeitspanne zwischen dem ersten Zeitpunkt (11) und dem vierten Zeitpunkt (t4); und

    l) vergleichen (S670) der berechneten Zeitspanne mit der bereitgestellten Auslösezeit TRT;

wobei, wenn die bereitgestellte Auslösezeit TRT kürzer ist als die berechnete Zeitspanne, das Drucksystem (1000) in Schritt h) dazu angesteuert wird, einen Bogen des Mediums aufzunehmen (S680) und darauf einen Qualitätssicherungsbogen zu drucken (S690), bevor seit dem ersten Zeitpunkt (11) eine Zeit vergangen ist, die gleich der bereitgestellten Auslösezeit TRT ist, und

wobei der Qualitätssicherungsbogen zu einem Ausgang (120) transportiert wird, der von der Sammelstation (210) des Finishers (200) getrennt ist.

2.   Das Verfahren nach Anspruch 1,
bei dem das Bestimmen (S500) des zweiten Zeitpunkts (t2) das Bereitstellen einer Einrichtzeit FST einschließt, die eine Zeit angibt, die der Finisher (200) benötigt, sich auf die Bearbeitung von Bögen des zweiten Druckauftrags einzurichten.

3.   Das Verfahren nach Anspruch 1 oder 2,
bei dem der Schritt h) das Ansteuern (S690) des Drucksystems (1000) einschließt, um zu dem dritten Zeitpunkt (t3) auf den aufgenommenen wenigstens einen Bogen des Mediums zu drucken.

4.   Das Verfahren nach Anspruch 1,
bei dem der vierte Zeitpunkt (t4) ein Zeitpunkt ist, an dem der Drucker (100) auf den wenigstens einen Bogen druckt, der zu dem dritten Zeitpunkt (t3) aus dem Eingabemodul (110) aufgenommen wurde.

5.   Das Verfahren nach einem der Ansprüche 1 bis 4,
weiterhin aufweisend, wenn ein bestimmter Satz aus irgendeinem Druckauftrag eine Mehrzahl von zu druckenden Bögen umfasst, die folgenden Schritte:

    bereitstellen (S710) einer Konsolidierungszeit TAT, die eine Zeit angibt, die ein Bogen aus dem bestimmten Satz hat, in der Sammelstation (210) des Finishers zu bleiben, bevor er von dem Rest des Finishers (200) bearbeitet werden kann;

    bestimmen (S720) eines fünften Zeitpunkts (t5) an dem der Rest des Finishers (200) das nächste Mal bereit oder in der Lage ist, Bögen aus der Sammelstation (210) zu empfangen,

    bestimmen (S730) eines sechsten Zeitpunktes (t6), der um die bereitgestellte Konsolidierungszeit TAT vor dem fünften Zeitpunkt (t5) liegt;

    ansteuern (S740) des Drucksystems (1000), um einen Bogen des Mediums für den letzten Bogen aus dem genannten bestimmten Satz derart aufzunehmen, dass er zu dem sechsten Zeitpunkt (t6) an der Sammelstation (210) eintrifft.

6.   Das Verfahren nach einem der Ansprüche 1 bis 5,
bei dem einige oder alle der Zeitpunkte und/oder Zeiten bestimmt werden auf der Basis eines Softwaremodells, das das Drucksystem (1000) simuliert.

**7.** Ein Drucker (100) mit einem Medieneingabemodul (110), einem getrennten Ausgabemodul (120) und einem Druckersteuergerät (150), wobei der Drucker (100) Teil eines Drucksystems (1000) ist, das weiterhin einen Finisher (200) mit einer Sammelstation (210) einschließt, wobei:

- das Druckersteuergerät (150) dazu konfiguriert ist, die Schritte a), e) - l) des Verfahrens nach einem der Ansprüche 1 bis 6 auszuführen,
- der Drucker (100) dazu konfiguriert ist, den Schritt b) des Verfahrens nach einem der Ansprüche 1 bis 6 auszuführen, und
- der Qualitätssicherungsbogen zu dem getrennten Ausgabemodul (120) transportiert wird.

**8.** Ein Drucksystem (1000), das aufweist:

einen Drucker (100) mit einem Medieneingabemodul (110);
einen Finisher (200) mit einer Sammelstation (210); und
ein Druckersteuergerät (150), wobei:

- der Drucker (100) dazu konfiguriert ist, den Schritt b) des Verfahrens nach einem der Ansprüche 1 bis 6 auszuführen,
- der Finisher (200) dazu konfiguriert ist, den Schritt d) des Verfahrens nach einem der Ansprüche 1 bis 6 auszuführen,
- das Druckersteuergerät (150) dazu konfiguriert ist, die Schritt a), e) - l) des Verfahrens nach einem der Ansprüche 1 bis 6 auszuführen, und
- wobei der gedruckte Qualitätssicherungsbogen zu einem Ausgang transportiert wird, der von der Sammelstation des Finishers getrennt ist.

**9.** Ein Computerprogramm (800) mit ausführbarem Programmcode (850), der Instruktionen enthält, die, wenn sie von dem Drucker nach Anspruch 7 ausgeführt werden, den Drucker veranlassen, die Schritte a), b), e) - l) des Verfahrens nach einem der Ansprüche 1 bis 6 auszuführen.

**10.** Ein Computerprogramm (800) mit ausführbarem Programmcode (850), der Instruktionen enthält, die, wenn sie von dem Drucksystem nach Anspruch 8 ausgeführt werden, das Drucksystem veranlassen, das Verfahren nach einem der Ansprüche 1 bis 6 auszuführen.

**11.** Nichtflüchtiges, computerlesbares Softwaremedium (900), das das Computerprogramm nach einem der Ansprüche 9 und 10 enthält.

**Revendications**

**1.** Procédé de fonctionnement d'un système d'impression (1000) pour l'impression sur des feuilles d'un support, le système d'impression (1000) incluant une imprimante (100) avec un module d'entrée de support (110) et un finisseur (200) avec une station d'assemblage (210), le procédé comprenant les étapes consistant à :

a) fournir (S100) un premier travail d'impression incluant au moins un jeu destiné à être imprimé et un second travail d'impression incluant au moins un jeu destiné à être imprimé ;
b) imprimer (S200) tous les jeux du premier travail d'impression ;
c) transporter (S300) les jeux imprimés du premier travail d'impression jusqu'à la station d'assemblage (210) du finisseur (200) ;
d) traiter (S400) les jeux imprimés du premier travail d'impression par le finisseur (200), finissant ledit traitement à un premier instant (t1) ;
e) déterminer (S500) un deuxième instant (t2) auquel la station d'assemblage (210) du finisseur (200) sera prête à, ou permise de, recevoir un jeu suivant à partir de l'imprimante (100) après le premier instant (t1), le jeu suivant étant un premier jeu du second travail d'impression ;
f) fournir (S610) un temps de première sortie sur imprimante FPOT indiquant une quantité de temps qu'une feuille du support requiert pour arriver à la station d'assemblage (210) du finisseur (200) après avoir été séparée du module d'entrée de support (110) ;
g) déterminer (S620) un troisième instant (t3), entre le premier instant (t1) et le deuxième instant (t2), auquel la séparation (S630) de l'au moins une feuille du support dans l'étape h) pour l'impression du jeu suivant doit être démarrée de manière telle à arriver à un moment prédéterminé POT au, ou après le, deuxième instant (t2), à la station d'assemblage (210) du finisseur (200), sur la base du temps de première sortie sur imprimante FPOT fourni ;
h) commander (S600) le système d'impression (1000) pour séparer (S630, S680) au moins une feuille du support à partir du module d'entrée de support (110), au troisième instant (t3), pour l'impression sur celui-ci, le procédé étant **caractérisé par** les étapes consistant à :

i) fournir (S640) un temps de déclenchement TRT indiquant une longueur d'un temps inactif de l'imprimante (100) après laquelle l'imprimante (100) est configurée pour commencer une action de maintenance ;
j) déterminer (S650) un quatrième instant (t4) auquel une feuille du support sera imprimée ensuite ;

k) calculer (S660) un temps entre le premier instant (t1) et le quatrième instant (t4) ; et

l) comparer (S670) le temps calculé au temps de déclenchement TRT fourni ;

dans lequel, lorsque le temps de déclenchement TRT fourni est plus court que le temps calculé, dans l'étape h), le système d'impression (1000) est commandé pour séparer (S680) une feuille du support et pour imprimer (S690) une feuille d'assurance qualité sur celui-ci avant qu'un temps égal au temps de déclenchement TRT fourni se soit écoulé après le premier instant (t1), et

dans lequel la feuille d'assurance qualité imprimée est transportée jusqu'à une sortie (120) séparée de la station d'assemblage (210) du finisseur (200).

2. Procédé selon la revendication 1,

dans lequel la détermination (S500) du deuxième instant (t2) comprend la fourniture d'un temps de configuration de finisseur FST indiquant un temps requis par le finisseur (200) pour se configurer pour traiter des jeux du second travail d'impression.

3. Procédé selon la revendication 1 ou la revendication 2,

dans lequel l'étape h) comprend la commande (S690) du système d'impression (1000) pour imprimer sur l'au moins une feuille séparée du support au troisième instant (t3).

4. Procédé selon la revendication 1,

dans lequel le quatrième instant (t4) est un instant auquel l'imprimante (100) imprime sur l'au moins une feuille séparée du module d'entrée (110) au troisième instant (t3).

5. Procédé selon l'une quelconque des revendications 1 à 4,

comprenant en outre, lorsqu'un jeu particulier d'un quelconque travail d'impression comprend une pluralité de feuilles destinées à être imprimées, les étapes consistant à :

fournir (S710) un temps d'intervention TAT indiquant un temps durant lequel une feuille dudit jeu particulier doit rester dans la station d'assemblage (210) du finisseur (200) avant qu'elle puisse être traitée par le reste du finisseur (200) ;

déterminer (S720) un cinquième instant (t5) auquel le reste du finisseur (200) est ensuite prêt à, ou permis de, recevoir des feuilles à partir de la station d'assemblage (210) ;

déterminer (S730) un sixième instant (t6) qui précède le cinquième instant (t5) selon le temps d'intervention TAT fourni ;

commander (S740) le système d'impression (1000) pour séparer une feuille du support pour la dernière feuille dudit jeu particulier de telle sorte qu'elle arrive au sixième instant (t6) à la station d'assemblage (210).

6. Procédé selon l'une quelconque des revendications 1 à 5,

dans lequel de quelconques ou la totalité des instants et/ou temps sont déterminés sur la base d'un modèle logiciel simulant le système d'impression (1000).

7. Imprimante (100) comprenant un module d'entrée de support (110), un module de sortie séparé (120) et un dispositif de commande d'imprimante (150), dans laquelle l'imprimante (100) fait partie d'un système d'impression (1000) incluant en outre un finisseur (200) avec une station d'assemblage (210), dans laquelle :

- le dispositif de commande d'imprimante (150) est configuré pour réaliser les étapes a), e) - l) du procédé selon l'une quelconque des revendications 1 à 6,
- l'imprimante (100) est configurée pour réaliser l'étape b) du procédé selon l'une quelconque des revendications 1 à 6, et
- la feuille d'assurance qualité est transportée jusqu'au module de sortie séparé (120).

8. Système d'impression (1000), comprenant :

une imprimante (100) avec un module d'entrée de support (110) ;
un finisseur (200) avec une station d'assemblage (210) ; et
un dispositif de commande d'imprimante (150), dans lequel :

- l'imprimante (100) est configurée pour réaliser l'étape b) du procédé selon l'une quelconque des revendications 1 à 6,
- le finisseur (200) est configuré pour réaliser l'étape d) du procédé selon l'une quelconque des revendications 1 à 6,
- le dispositif de commande d'imprimante (150) est configuré pour réaliser les étapes a), e) - l) du procédé selon l'une quelconque des revendications 1 à 6, et
- dans lequel la feuille d'assurance qualité imprimée est transportée jusqu'à une sortie séparée de la station d'assemblage du finisseur.

9. Programme informatique (800), comprenant un code de programme exécutable (850) comprenant des instructions qui, lorsqu'elles sont exécutées par l'imprimante selon la revendication 7, amènent l'imprimante à réaliser les étapes a), b), e) - l) du procédé selon l'une quelconque des revendications 1 à 6.

10. Programme informatique (800), comprenant un code de programme exécutable (850) comprenant des instructions qui, lorsqu'elles sont exécutées par le système d'impression selon la revendication 8, amènent le système d'impression à réaliser le procédé selon l'une quelconque des revendications 1 à 6.

11. Support logiciel non transitoire lisible par ordinateur (900), comprenant le programme informatique d'une des revendications 9 et 10.

Fig. 1

Fig. 2

Fig. 3

PROVIDE 1st+2nd PRINT JOB — S100

PRINT SETS OF 1st PRINT JOB — S200

TRANSPORT PRINTED SETS — S300

FINISH SETS AT t1 — S400

DETERMINE t2 — S500
- S510 — PROVIDE FST
- S520 — CALC t2 FROM t1 and FST

S600 — SEPARATE SHEET IN <t1;t2>
- S610
- S620
- S640
- S650
- S660
- S670 (+ → S680 → S690) (− → S630)

Fig. 4

PROVIDE TAT — S710

DETERMINE t5 — S720

DETERMINE t6 — S730

SEPARATE SHEET — S740

Fig. 5

EXECUTABLE CODE — 800 / 850

COMPUTER PROGRAM PRODUCT

Fig. 6

EXECUTABLE CODE — 900 / 950

NON-TRANSITORY COMPUTER-READABLE DATA STORAGE MEDIUM

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170206041 A1, van Horssen

- EP 0478341 A2

**Non-patent literature cited in the description**

- *JDF Specification,* 31 December 2013

- *JDF Specification,* 28 February 2018